# EUROPÄISCHE PATENTSCHRIFT

(11) **EP 0 880 033 B1**
(45) Veröffentlichungstag und Bekanntmachung des Hinweises auf die Patenterteilung: **26.03.2003**
(21) Anmeldenummer: 98107384.4
(22) Anmeldetag: 23.04.1998
(51) Int. Cl.: G01V 1/20, G01V 1/38

(54) **Schleppantenne für Sonarsystem**
Towed device for sonar system
Corps remorqué pour système sonar

(30) Priorität: 20.05.1997 DE 19720991
(43) Veröffentlichungstag der Anmeldung: 25.11.1998
(73) Patentinhaber: STN ATLAS Elektronik GmbH, 28309 Bremen (DE)
(72) Erfinder: Schmidt-Schierhorn, Helmut, 28259 Bremen (DE); Höstermann, Horst, 28211 Bremen (DE); Bauer, Wilhelm, 27711 Osterholz-Scharmbeck (DE); Licht, Joachim, 28201 Bremen (DE); Brenner, Axel, 28259 Bremen (DE)
(74) Vertreter: Thul, Hermann, Dipl.-Phys.

(56) Entgegenhaltungen:
- EP-A- 0 416 992
- DE-B- 1 207 099
- GB-A- 2 314 627
- US-A- 3 414 874
- US-A- 4 958 311

## Beschreibung

Die Erfindung betrifft eine Schleppantenne für ein Sonarsystem zur Detektion und/oder Ortung von Schallquellen im Wasser der im Oberbegriff des Anspruchs 1 definierten Gattung.

Solche Schleppantennen dienen bei einem in einem Schleppfahrzeug installierten Sonarsystem für die Detektion und Ortung von Zielen zur präzisen Bestimmung des Einfallswinkels von Schallwellen, die von Zielen ins Wasser abgestrahlt oder von im Wasser befindlichen Zielen reflektiert werden. Die mindestens zwei parallelen, sensitiven Hydrophonstränge oder -streamer ermöglichen dabei eine sog. Rechts-Rechts-/Linksunterscheidung, d.h. eine Aussage darüber, ob die Richtung des Schalleinfalls steueroder backbords der Schleppantenne liegt.

Bei einer als Twinarray bekannten Schleppantenne dieser Art (Joris Janssen Lok, "17-ton ALF heads Dutch sonar tests", Jane's Defence Weekly, 26. March 1994, Seiten 26 bis 31) werden vom Schleppfahrzeug zwei einzelne Hydrophonstreamer getrennt ausgebracht und mit ihrem Stranganfang mit Querabstand voneinander über je ein Zugkabel an einem Schleppkörper, auch Otter genannt, befestigt. Der Schleppkörper, der hier den Sendeteil des sog. Aktivsonarsystems aufnimmt, wird über ein weiteres Zugkabel von einem Schleppfahrzeug im Wasser nachgeschleppt. Durch an jedem Strangende der beiden Hydrophonstreamer befestigte Bremskörper, die einen vergrößerten Strömungswiderstand besitzen und dadurch am Strangende eine der Schlepprichtung entgegenwirkende Zugkraft erzeugen, werden die beiden Hydrophonstreamer so gut wie möglich gestreckt gehalten. Da sich jeder Hydrophonstreamer hinter dem vorderen Zugkabel in der Strömung frei ausrichtet, ist eine für die Rechts-/Links-Unterscheidung vorteilhafte Parallelität der beiden Hydrophonstreamer, also ein ausreichend konstanter Querabstand zwischen den beiden Hydrophonstreamern, nicht gegeben. Daher müssen zusätzliche aufwendige Verfahren eingesetzt werden, um die genaue Lage der Hydrophone im Moment des Schalleinfalls zu erfassen und damit die exakte Schalleinfallsrichtung ermitteln zu können.

Bei einer bekannten Schleppantenne für seismische Prospektion im Unterwasserbereich (US 3,414,874, Fig. 3) sind die Stränge an ihrem Stranganfang durch ein Kabel miteinander verbunden, und zwei an den beiden äußersten Strängen an deren Stranganfang angeordnete Otter oder Schleppkörper sorgen dafür, daß beim Schleppen auf das Verbindungskabel einer Querkraftkomponente wirkt, die das Verbindungskabel zwischen den Stranganfängen straff gespannt hält.

Bei einer weiteren bekannten Schleppantenne (US 4 958 331) sind eine Vielzahl von akustisch sensitiven Strängen vorhanden, die beim Schleppen durch ein Schleppfahrzeug sich im Parallelabstand zueinander erstrecken. Jeweils eine Gruppe von Strängen ist an einer von zwei Spannleinen befestigt, wobei die Stranganfänge der Stränge in einem festen Querabstand voneinander an der zugeordneten Spannleine festgelegt sind. Von jeder Spannleine ist das eine Ende an einem vom Schleppfahrzeug geschleppten Stabilisator und das andere Ende jeweils an einem Otter befestigt. Die Otter erzeugen beim Schleppen eine seitlich von der Schleppantenne weggerichtete Zugkraftkomponente, durch welche die Spannleinen straff gehalten werden.

Bei einer ebenfalls bekannten Schleppantenne der eingangs genannten Art (EP 0 416 992 A1 oder DE 690 01 109 T2) sind drei um jeweils 120° Umfangswinkel zueinander versetzt angeordnete, akustisch sensitive Stränge vorhanden, die im festen Querabstand zueinander parallel verlaufen. Die Fixierung des Querabstands zwischen den Strängen erfolgt mittels eines im Querschnitt sternförmigen Kernstücks, das sich über die ganze Stranglänge erstreckt und über die gesamte Stanglänge mit jedem der drei Stränge fest verbunden ist. Das zentrale Kernstück ist aus Polyurethan gefertigt, so daß die Schleppantenne beim Biegen eine gewissen Nachgiebigkeit aufweist, die ein Einholen und mit Abstrichen ein Aufrollen der Schleppantenne ermöglicht.

Der Erfindung liegt die Aufgabe zugrunde, eine Schleppantenne der eingangs genannten Art in Hinblick auf ihre Fertigungskosten konstruktiv günstiger zu gestalten, gleichzeitig aber die akustisch wichtige Konstanz des Querabstands zwischen den akustisch sensitiven Strängen beim Schleppen der Schleppantenne aufrechtzuerhalten, und das Handling der Schleppantenne beim Ausbringen und Einholen zu verbessern.

Die Aufgabe ist erfindungsgemäß durch die Merkmale im Anspruch 1 gelöst.

Die erfindungsgemäße Schleppantenne hat den Vorteil, daß durch das bezüglich des gegenseitigen Querabstands starre Fixieren ausschließlich der Stranganfänge und Strangenden der akustisch sensitiven Stränge oder Streamer sich beim Schleppen der Schleppantenne eine gute Parallelität zwischen den einzelnen Strängen mit ausreichend guter Querabstandskonstanz einstellt. Durch die beiden nur an den Stranganfängen und an den Strangenden vorhandenen, abstandsstarren Verbindungselemente ist es außerdem möglich, für alle Stränge ein gemeinsames Zugkabel und eine gemeinsame Schleppbremse sowie gemeinsame Dämpfungsmodule in Zuordnung zum Zugkabel einerseits und zur Schleppbremse andererseits vorzusehen, so daß gegenüber den bekannten Schleppantennen eine Vielzahl von Bauteilen eingespart werden kann. Dadurch werden nicht nur die Gestehungskosten für die Schleppantenne drastisch gesenkt, sondern auch deren Gesamtgewicht verringert, so daß sie leichter einund ausgebracht werden kann und das Handlingsystem hierfür weniger stabil und damit weniger schwergewichtig ausgeführt werden muß. Durch den Wegfall der Mehrfachbauteile, wie Zugkabel, Schleppbremse und Dämpfungsmodule, ergeben sich drastische Einsparungsmöglichkeiten bei den Herstellungskosten gegenüber herkömmlichen Schleppantennen. Die gute Querabstandskonstanz zwischen den akustisch sensitiven Strängen der Schleppantenne läßt den Zusatzaufwand für die Signalverarbeitung zur Rechts-/Links-Erkennung drastisch sinken. Gegenüber der bekannten Schleppantenne mit drei über die gesamte Stranglänge fest miteinander verbundenen Strängen ergibt sich der Vorteil des geringeren Gewichts und der größeren Flexibilität beim Aufrollen der Schleppantenne, sowie die Möglichkeit jeden Strang akustisch sehr gut entkoppeln zu können, z.B. dadurch, daß er über einen vorderen und hinteren Dämpfungsmodul an das vordere und hintere abstandsstarre Verbindungselement angebunden wird.

Zweckmäßige Ausführungsformen der erfindungsgemäßen Schleppantenne mit vorteilhaften Weiterbildungen und Ausgestaltungen der Erfindung ergeben sich aus den weiteren Ansprüchen.

Gemäß einer bevorzugten Ausführungsform der Erfindung ist bei einer als sog. Twinarray mit zwei akustisch sensitiven Strängen ausgerüsteten Schleppantenne an jeder der die Stranganfänge und Strangenden der beiden Stränge verbindenden, die Verbindungselemente bildenden Anschlußgabeln ein Stabilisator angeordnet, der mit einem strömungsgünstigen Außenprofil versehen ist. An dem den Stranganfängen zugeordneten Stabilisator sind zusätzlich Strömungskörper vorgesehen, die auf dessen Ober- und Unterseite jeweils mit Abstand von der Stabilisatoroberfläche achsparallel zur Gabelachse ausgerichtet sind. Durch die Stabilisatoren wird erreicht, daß sowohl Gewichtsüberschüsse im Bereich der Gabeln als auch durch das Zugkabel hervorgerufene Torsionsmomente ausgeglichen werden. Außerdem wird durch den hinteren Stabilisator ein Verdrehen der Schleppantenne mit der Folge des Sichüberkreuzens der Stränge beim Ausbringen der Schleppantenne vom Schleppfahrzeug verhindert. Die Form der Stabilisatoren ist hydrodynamisch optimiert.

Gemäß einer vorteilhaften Ausführungsform der Erfindung ist jeder Stabilisator längs der Gabelachse in eine obere und untere Stabilisatorhälfte geteilt, die von gegenüberliegenden Seiten her auf die Anschlußgabel aufsteckbar und miteinander verbindbar, vorzugsweise verrastbar, sind. Durch diese konstruktive Gestaltung können die beiden Stabilisatoren beim Ausbringen der Schleppantenne schnell montiert und beim Einholen der Schleppantenne wieder schnell demontiert werden, so daß die Stabilisatoren das übliche Aufwickeln der Schleppantenne auf einer Trommelwinde nicht behindern.

Gemäß einer vorteilhaften Ausführungsform der Erfindung ist zwischen dem Stranganfang und dem Strangende eines jeden Stranges einerseits und dem vorderen und hinteren Verbindungselement andererseits ein Dämpfungsmodul (VIM) angeordnet. Durch die vorderen Dämpfungsmodule wird eine gute akustische Entkopplung der akustisch sensitiven Stränge gegenüber den Schlag- und Vibrationsgeräuschen des Zugkabels sowie gegenüber den von dem ggf. dem Zugkabel vorgesetzten Schleppkörper oder Otter und den von der vorderen Anschlußgabel getragenen Stabilisator hervorgerufenen Strömungsgeräuschen erzielt, und durch die hinteren Dämpfungsmodule wird eine akustischen Entkopplung gegenüber den Schlag- und Vibrationsgeräuschen der Schleppbremse und den Strömungsgeräuschen des an der hinteren Anschlußgaben befestigten Stabilisators erreicht. Dies führt insbesondere im tieffrequenten Bereich zu einem beträchtlichen Gewinn des vom Twinarray empfangenen Nutzsignals, während im hochfrequenten Bereich die Anordnung der Dämpfungsmodule vor dem vorderen und hinter dem hinteren Verbindungselement für akustische Zwecke ausreichend ist, so daß hier durch die geringere Anzahl der Dämpfungsmodule die Fertigungskosten für die Schleppantenne reduziert werden können.

Die Erfindung ist anhand eines in der Zeichnung dargestellten Ausführungsbeispiels im folgenden näher beschrieben. Dabei zeigt die Zeichnung ausschnittsweise eine perspektivische Ansicht einer Schleppantenne für ein Sonarsystem in Explosionsdarstellung.

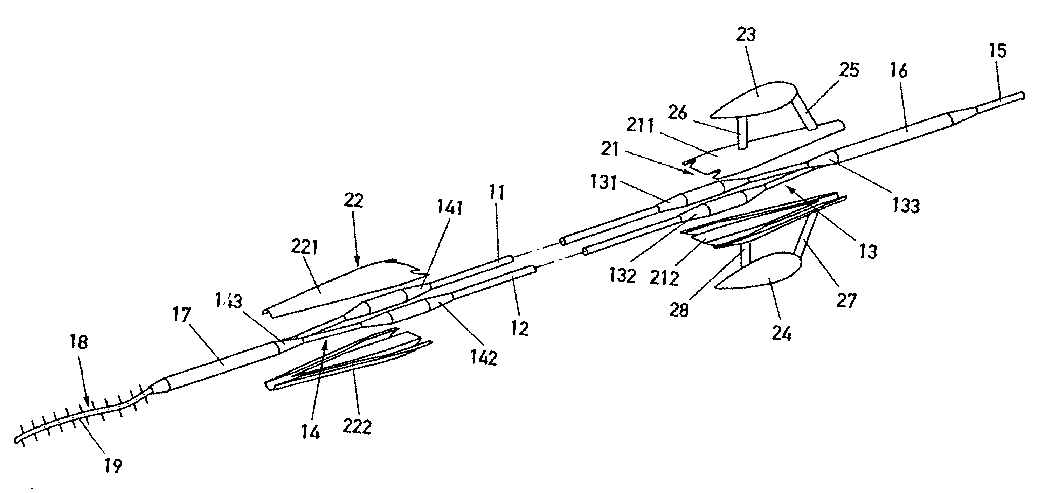

Die in Fig. 1 ausschnittsweise perspektivisch dargestellte Schleppantenne für ein Sonarsystem zur Detektion und/oder Ortung von Schallquellen im Wasser weist zwei akustisch sensitive Streamer oder Stränge 11, 12 auf, in denen jeweils eine Mehrzahl von in Strangrichtung hintereinander angeordneten elektroakustischen Wandlern, sog. Hydrophonen, die hier nicht weiter dargestellt sind, aufgenommen sind. Die einzelnen Hydrophone sind in bekannter Weise mit konstantem Abstand voneinander im Streamer festgelegt und über elektrische Signal- und Stromversorgungsleitungen mit dem in einem Schleppfahrzeug installierten Sonarsystem verbunden. Im Betriebszustand wird die Schleppantenne, die wegen ihrer beiden akustisch sensitiven Streamer oder Stränge 11, 12 auch als Twinarray bezeichnet wird, von dem Schleppfahrzeug im Wasser nachgeschleppt, während sie bei Nichtgebrauch vom Schleppfahrzeug mittels einer Winde eingeholt und auf einer Windentrommel an Deck des Schleppfahrzeugs gelagert wird.

Die beiden Stränge 11, 12 sind an ihrem Stranganfang und ihrem Strangende jeweils durch ein den gegenseitigen Querabstand konstant haltendes Verbindungselement aneinander festgelegt, wobei der vordere und hintere Querabstand gleich groß ist. Im hier beschriebenen Ausführungsbeispiel sind die Verbindungselemente jeweils als eine Y-förmige Anschlußgabel ausgeführt. Die die beiden Stranganfänge der Stränge 11, 12 verbindende vordere Anschlußgabel ist mit 13 und die die beiden Strangenden der beiden Stränge 11, 12 verbindende hintere Anschlußgabel ist mit 14 bezeichnet. Jede Anschlußgabel 13, 14 weist drei Anschlußenden 131, 132, 133 bzw. 141, 142, 143 auf, die auf den Eckpunkten eines gleichschenkligen Dreiecks liegen und von denen die beiden auf den Hypothenuseneckpunkten liegenden Anschlußenden 131, 132 bzw. 141, 142 den Stranganfang bzw. das Strangende der beiden Stränge 11, 12 aufnehmen. In das dritte Anschlußenden 131 der Anschlußgabel 13 ist ein Zugkabel 15 eingeführt, das mechanisch und elektrisch mit den beiden Strängen 11, 12 verbunden ist. Um die auf die vordere Anschlußgabel 13 wirkenden Zugkräfte zu dämpfen und die beiden akustisch sensitiven Stränge 11, 12 von Störgeräuschen zu entkoppeln, die beim Schleppen der Schleppantenne entstehen, ist zwischen dem Zugkabel 15 und dem Anschlußende 133 der Gabel 13 noch ein sog. Dämpfungsmodul 16, auch VIM genannt, angeordnet. Über das Zugkabel 15, das am Schleppfahrzeug oder an einem von diesem nachgeschleppten Schleppkörper, auch Otter genannt, festgelegt ist, erfolgt die Stromversorgung der Stränge 11, 12 sowie die Signalverbindung zu dem Sonarsystem. Am dritten Anschußende 143 der den Strangenden der beiden Stränge 11, 12 zugeordneten hinteren Anschlußgabel 14, ist wiederum unter Zwischenschaltung eines Dämpfungsmoduls 17 zur akustischen Entkopplung der beiden Stränge 11, 12, eine Schleppbremse 18 befestigt, welche durch ihren erhöhten Strömungswiderstand eine Zugkraft an den Strangenden der beiden Stränge 11, 12 erzeugt, die diese während des Schleppvorgangs weitgehend gestreckt hält. Als Schleppbremse 18 wird vorzugsweise ein Faserseil 19 verwendet, das aus mehreren miteinander verdrillten Fasersträngen besteht, zwischen denen Faserquerstücke hindurchgezogen sind.

An den beiden Anschlußgabeln 13, 14 ist jeweils ein Stabilisator 21 bzw. 22 angeordnet. Die beiden Stabilisatoren 21, 22 sind so ausgeführt, daß sie sowohl Gewichtsüberschüsse im Bereich der Anschlußgabeln 13, 14 als auch Torsionsmomente durch das Zugkabel 15 ausgleichen. Die Form der Stabilisatoren 21, 22 ist hydrodynamisch optimiert. Jeder Stabilisator 21 bzw. 22 ist von der zugeordneten Anschlußgabel 13 bzw. 14 trennbar ausgebildet, wozu er längs der Gabelachse in eine obere und untere Stabilisatorhälfte 211 und 212 bzw. 221 und 222 geteilt ist. Die beiden Stabilisatorhälften 211, 212 bzw. 221, 222 sind von gegenüberliegenden Seiten der Anschlußgabel 13 bzw. 14 her aufsteckbar und miteinander verbindbar, wobei sie vorzugsweise längs der Trennebene miteinander verrastet werden. Jeder Stabilisatorhäfte 211, 212 bzw. 221, 222 bildet eine Halbschale mit strömungsgünstigem Außenprofil, die formschlüssig auf die Ober- und Unterseite der zugeordneten Anschlußgabel 13 bzw. 14 aufsetzbar ist. Der der vorderen Anschlußgabel 13 an den Stranganfängen zugeordnete Stabilisator 21 weist zusätzlich zwei Strömungskörper 23, 24 auf, die mit Abstand von der Stabilisatoroberfläche oberhalb und unterhalb des Stabilisators 21 achsparallel zur Gabelachse angeordnet sind. Jeder Strömungskörper 23, 24 ist dabei mittels zweier beabstandeter Tragstege 25, 26 bzw. 27, 28 an der Oberfläche der zugeordneten Stabilisatorhälfte 211 bzw. 212 befestigt, wobei die Tragstege 25 bis 28 sich in einer durch die Gabelachse verlaufenden Ebene erstrecken.

Wie nicht weiter dargestellt ist, können mit den Dämpfungsmodulen 16, 17 gleichartige Dämpfungsmodule oder VIM zwischen den Strängen 11, 12 und den Anschlußgabeln 13, 14 angeordnet sein, wobei jeweils ein Dämpfungsmodul zwischen jedem Stranganfang der Stränge 11, 12 einerseits und jedem Anschlußende 131 bzw. 132 der vorderen Anschlußgabel 13 andererseits und jeweils ein Dämpfungsmodul zwischen jedem Strangende der Stränge 11, 12 einerseits und jedem Anschlußende 141, 142 der hinteren Anschlußgabel 14 andererseits plaziert ist. Hierdurch werden insbesondere im tieffrequenten Bereich erhebliche akustische Vorteile erzielt, die die Empfangsqualität der Schleppantenne verbessern.

Die Erfindung ist nicht auf das vorstehend beschriebene Ausführungsbeispiel beschränkt. So kann die Schleppantenne mehr als zwei akustisch sensitive Stränge aufweisen, die jeweils im Querabstand parallel zueinander verlaufen. Die die mehreren Stränge an ihren Stranganfängen und ihren Strangenden festlegenden Verbindungselemente weisen dann entsprechend eine Mehrzahl von Anschlußenden für die einzelnen Stränge auf. Nach wie vor sind jedoch die Verbindungselemente über die beiden Dämpfungsmodule einerseits mit dem Zugkabel und andererseits mit der Schleppbremse verbunden.

## Patentansprüche

1. Schleppantenne für ein Sonarsystem zur Detektion und/oder Ortung von Schallquellen im Wasser mit mindestens zwei zumindest im Schleppbetrieb mit fixiertem Querabstand nebeneinanderliegenden akustisch sensitiven Strängen (11, 12), die eine Mehrzahl von in Strangrichtung hintereinander angeordneten, elektroakustischen Wandlern (Hydrophone) aufweisen **dadurch gekennzeichnet, daß** die Fixierung des Querabstands ausschließlich am Stranganfang und am Strangende der Stränge (11, 12) jeweils mittels eines abstandsstarren Verbindungselements (13, 14) vorgenommen ist, das mit jedem Stranganfang bzw. jedem Strangende verbunden ist.

2. Schleppantenne nach Anspruch 1, **dadurch gekennzeichnet, daß** zwei akustisch sensitive Stränge (11, 12) vorgesehen und die Verbindungselemente als vorzugsweise Y-förmige Anschlußgabeln (13, 14) ausgeführt sind.

3. Schleppantenne nach Anspruch 2, **dadurch gekennzeichnet, daß** jede Anschlußgabel (13, 14) drei Anschlußenden (131, 132, 133 bzw. 141, 142, 143) aufweist, die auf den Eckpunkten eines gleichschenkligen Dreiecks liegen und von denen die beiden auf den Hypothenuseneckpunkten liegenden Anschlußenden (131, 132 bzw. 141, 142) den Stranganfang bzw. das Strangende der beiden Stränge (11, 12) aufnehmen.

4. Schleppantenne nach Anspruch 3, **dadurch gekennzeichnet, daß** in das auf dem Katheteneckpunkt liegende dritte Anschlußende (133) der dem Stranganfang zugeordneten Anschlußgabel (13) ein elektrische Leiter enthaltendes Zugkabel (15) eingeführt ist, das mechanisch und elektrisch mit den beiden Strängen (11, 12) verbunden ist.

5. Schleppantenne nach Anspruch 4, **dadurch gekennzeichnet, daß** zwischen dem Zugkabel (15) und der Anschlußgabel (13) ein Dämpfungsmodul (16) zur Dämpfung der auf die Anschlußgabel (13) wirkenden Zugkräfte angeordnet ist.

6. Schleppantenne nach einem der Ansprüche 3 bis 5, **dadurch gekennzeichnet, daß** an dem auf den Katheteneckpunkt liegenden dritten Anschlußende (143) der den Strangenden zugeordneten Anschlußgabel (14) eine Schleppbremse (18), vorzugsweise in Form eines Faserseils (19), befestigt ist.

7. Schleppantenne nach Anspruch 6, **dadurch gekennzeichnet, daß** zwischen der Schleppbremse (18) und der Anschlußgabel (14) ein weiterer Dämpfungsmodul (17) zur Dämpfung der auf die Anschlußgabel (14) wirkenden Bremskräfte angeordnet ist.

8. Schleppantenne nach einem der Ansprüche 1 bis 7, **dadurch gekennzeichnet, daß** an jeder Anschlußgabel (13, 14) ein Stabilisator (21, 22) angeordnet ist.

9. Schleppantenne nach Anspruch 8, **dadurch gekennzeichnet, daß** der Stabilisator (21, 22) trennbar mit der zugeordneten Anschlußgabel (13, 14) ausgebildet ist.

10. Schleppantenne nach Anspruch 9, **dadurch gekennzeichnet, daß** jeder Stabilisator (21, 22) längs der Gabelachse in eine obere und untere Stabilisatorhälfte (211, 212 bzw. 221, 222) geteilt ist, die von gegenüberliegenden Seiten her auf die Anschlußgabel (13, 14) aufsteckbar und miteinander verbindbar, vorzugsweise verrastbar, sind.

11. Schleppantenne nach Anspruch 10, **dadurch gekennzeichnet, daß** jede Stabilisatorhälfte (211, 212, 221, 222) als Halbschale mit strömungsgünstigem Außenprofil ausgebildet ist, die formschlüssig auf die Ober- und Unterseite der zugeordneten Anschlußgabel (13, 14) aufsetzbar ist.

12. Schleppantenne nach einem der Ansprüche 8 bis 11, **dadurch gekennzeichnet, daß** der der den Stranganfängen zugeordneten Anschlußgabel (13) zugehörige Stabilisator (21) auf seiner Ober- und Unterseite jeweils einen Strömungskörper (23, 24) trägt, der mit Abstand von der Stabilisatoroberfläche achsparallel zur Gabelachse ausgerichtet ist.

13. Schleppantenne nach Anspruch 12, **dadurch gekennzeichnet, daß** jeder Strömungskörper (23, 24) an zwei voneinander beabstandeten Tragstegen (25, 26 bzw. 27, 28) befestigt ist, die sich in einer durch die Gabelachse verlaufenden, vertikalen Ebene erstrecken und an der Außenfläche der Stabilisatorhälften (211, 212) befestigt sind.

14. Schleppantenne nach einem der Ansprüche 1 bis 13, **dadurch gekennzeichnet, daß** zwischen dem Stranganfang und Strangende eines jeden Strangs (11, 12) einerseits und dem vorderen und hinteren Verbindungselement andererseits jeweils ein Dämpfungsmodul angeordnet ist.

## Claims

1. Towed antenna for a sonar system for detecting and/or locating sound sources in water, having at least two acoustically sensitive strands (11, 12) which are situated next to one another with a fixed transverse spacing, at least in towed operation, and have a plurality of electroacoustic transducers (hydrophones) arranged one behind another in the strand direction, **characterized in that** the fixing of the transverse spacing is undertaken exclusively at the start and at the end of the strands (11, 12) by means in each case of a connecting element (13, 14) which has a rigid spacing and is connected to each start of the strand and each end of the strand.

2. Towed antenna according to Claim 1, **characterized in that** two acoustically sensitive strands (11, 12) are provided, and the connecting elements are designed as preferably Y-shaped connecting forks (13, 14).

3. Towed antenna according to Claim 2, **characterized in that** each connecting fork (13, 14) has three connecting ends (131, 132, 133 and 141, 142, 143, respectively) which are situated at the corner points of an isosceles triangle, and of which the two connecting ends (131, 132 and 141, 142 respectively) situated at the hypotenuse corner points respectively hold the start and end of the two strands (11, 12).

4. Towed antenna according to Claim 3, **characterized in that** inserted into the third connecting end (133), situated at the side corner point, of the connecting fork (13) assigned to the start of the strand is a tension cable (15) containing electric conductors which is connected mechanically and electrically to the two strands (11, 12).

5. Towed antenna according to Claim 4, **characterized in that** a damping module (15) is arranged between the tension cable (15) and the connecting fork (13) in order to damp the tensile forces acting on the connecting fork (13).

6. Towed antenna according to one of Claims 3 to 5, **characterized in that** a towing brake (18), preferably in the form of a fibre cable (19), is fastened on the third connecting end (143), situated at the side corner point, of the connecting fork (14) assigned to the ends of the strands.

7. Towed antenna according to Claim 6, **characterized in that** a further damping module (17) for damping the braking forces acting on the connecting fork (14) is arranged between the towing brake (18) and the connecting fork (14).

8. Towed antenna according to one of Claims 1 to 7, **characterized in that** a stabilizer (21, 22) is arranged on each connecting fork (13, 14).

9. Towed antenna according to Claim 8, **characterized in that** the stabilizer (21, 22) is constructed separably with the assigned connecting fork (13, 14).

10. Towed antenna according to Claim 9, **characterized in that** each stabilizer (21, 22) is divided along the fork axis into an upper and lower stabilizer half (211, 212 and 221, 222 respectively) which can be plugged onto the connecting fork (13, 14) from opposite sides and can be connected to one another, preferably latched to one another.

11. Towed antenna according to Claim 10, **characterized in that** each stabilizer half (211, 212, 221, 222) is constructed as a half shell which has a streamlined outer profile and can be mounted in a self-closed fashion on the top side and underside of the assigned connecting fork (13, 14).

12. Towed antenna according to one of Claims 8 to 11, **characterized in that** the stabilizer (21) pertaining to the connecting fork (13) assigned to the starts of the strands respectively bears on its top side and underside a streamlined body (23, 24) which is aligned with its axis parallel to that of the fork and at a spacing from the stabilizer surface.

13. Towed antenna according to Claim 12, **characterized in that** each streamlined body (23, 24) is fastened on two mutually spaced support webs (25, 26 and 27, 28 respectively) which extend in a vertical plane running through the fork axis and are fastened on the outer surface of the stabilizer halves (211, 212).

14. Towed antenna according to one of Claims 1 to 13, **characterized in that** a damping module is respectively arranged between the start and end of each strand (11, 12), on the one hand, and the front and rear connecting element, on the other hand.

## Revendications

1. Antenne traînante pour un système sonar, destinée à détecter et à localiser des sources sonores dans l'eau, comportant au moins deux lignes (11,12) sensibles sur le plan acoustique juxtaposées à une distance transversale fixée du moins en fonctionnement à la traîne lesquelles présentent plusieurs convertisseurs électroacoustiques (hydrophones) disposés successivement dans le sens des lignes, **caractérisée en ce que** la fixation de la distance transversale est réalisée exclusivement en début et en fin de ligne des lignes (11,12) respectivement au moyen d'un élément de liaison (13,14) rigide au point de vue distance qui est connecté respectivement à chaque début de ligne et à chaque fin de ligne.

2. Antenne traînante selon la revendication 1 **caractérisée en ce que** deux lignes sensibles sur le plan acoustique (11,12) sont prévues et les éléments de liaison sont réalisés comme des branchements de connexion (13,14) de préférence en forme d'Y.

3. Antenne traînante selon la revendication 2, **caractérisée en ce que** chaque branchement de connexion (13,14) présente trois extrémités de connexion (respectivement 131,132,133 et 141,142,143) qui se trouvent sur les sommets d'un triangle isocèle et dont les deux extrémités de connexion se trouvant sur les sommets d'hypoténuse (respectivement 131,132 et 141,142) reçoivent respectivement le début de ligne et la fin de ligne des deux lignes (11,12).

4. Antenne traînante selon la revendication 3, **caractérisée en ce qu'**un câble de traction (15) contenant un conducteur électrique est introduit dans la troisième extrémité de connexion (133), se trouvant sur le sommet de cathète, du branchement de connexion associé au début de ligne (13), ledit câble de traction étant raccordé mécaniquement et électriquement aux deux lignes (11,12).

5. Antenne traînante selon la revendication 4 **caractérisée en ce qu'**entre le câble de traction (15) et le branchement de connexion (13), un module d'atténuation (16) est disposé afin d'atténuer les forces de traction agissant sur le branchement de connexion (13).

6. Antenne traînante selon l'une quelconque des revendications 3 à 5, **caractérisée en ce qu'**un frein traînant (18), de préférence sous forme d'un cordage de fibres (19) est fixé à la troisième extrémité de connexion (143), se trouvant au sommet de cathète, du branchement de connexion (14) associé aux fins de ligne.

7. Antenne traînante selon la revendication 6, **caractérisée en ce qu'**un autre module d'atténuation (17) est disposé entre le frein traînant (18) et le branchement de connexion (14) afin d'atténuer les forces de freinage agissant sur le branchement de connexion (14).

8. Antenne traînante selon l'une quelconque des revendications 1 à 7, **caractérisée en ce que** sur chaque branchement de connexion (13,14) est disposé un stabilisateur (21,22).

9. Antenne traînante selon la revendication 8, **caractérisée en ce que** le stabilisateur (21,22) est conformé de façon à pouvoir être séparé du branchement de connexion associé (13,14).

10. Antenne traînante selon la revendication 9, **caractérisée en ce que** chaque stabilisateur (21,22) est divisé le long de l'axe de branchement en une moitié supérieure et en une moitié inférieure de stabilisateur (respectivement 211,212 et 221,222) qui peuvent être placées depuis des côtés opposés sur le branchement de connexion (13,14) et assemblées l'une à l'autre, de préférence par encliquetage.

11. Antenne traînante selon la revendication 10 **caractérisée en ce que** chaque moitié de stabilisateur (211,212 et 221,222) est conformée comme demi-coquille avec un profil extérieur favorable à l'écoulement, qui peut être placée par liaison par forme sur la face supérieure et inférieure du branchement de connexion associé (13,14).

12. Antenne traînante selon l'une quelconque des revendications 8 à 11, **caractérisée en ce que** le stabilisateur (21) appartenant au branchement de connexion (13) associé aux débuts de ligne porte sur sa face supérieure et inférieure respectivement un corps d'écoulement (23,24) qui est orienté de façon à avoir son axe parallèle à l'axe de branchement, à distance de la surface du stabilisateur.

13. Antenne traînante selon la revendication 12, **caractérisée en ce que** chaque corps d'écoulement (23,24) est fixé à deux pièces intermédiaires d'appui (respectivement 25,26 et 27,28) situées à distance l'une de l'autre, s'étendant dans un plan vertical passant par l'axe de branchement et fixées sur la surface extérieure des moitiés de stabilisateur (211,212).

14. Antenne traînante selon l'une quelconque des revendications 1 à 13, **caractérisée en ce qu'**entre le début de ligne et la fin de ligne de chaque ligne (11,12) d'une part et l'élément de liaison avant et l'élément arrière d'autre part, un module d'atténuation est à chaque fois disposé.
